# FASCICULE DE BREVET EUROPEEN

(11) **EP 3 501 865 B1**
(45) Date de publication et mention de la délivrance du brevet: **28.10.2020**
(21) Numéro de dépôt: 18212079.0
(22) Date de dépôt: 12.12.2018
(51) Int. Cl.: B60H 1/32, B60P 3/20

(54) **PROCÉDÉ DE GESTION DU FONCTIONNEMENT D'UN CAMION DE TRANSPORT FRIGORIFIQUE DE PRODUITS THERMOSENSIBLES DU TYPE À INJECTION INDIRECTE**
MANAGEMENTVERFAHREN FÜR DEN BETRIEB EINES KÜHLTRANSPORTWAGENS MIT INDIREKTER EINSPRITZUNG FÜR WÄRMEEMPFINDLICHE PRODUKTE
METHOD FOR MANAGING THE OPERATION OF A REFRIGERATED TRANSPORT TRUCK OF THE INDIRECT INJECTION TYPE FOR HEAT-SENSITIVE PRODUCTS

(30) Priorité: 21.12.2017 FR 1762705
(43) Date de publication de la demande: 26.06.2019
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: BERNARD, Jean-Pierre, 78280 GUYANCOURT (FR); DALLAIS, Antony, 91640 Janvry (FR); QUENEDEY, Jean-Patrice, 78350 JOUY-EN-JOSAS (FR)
(74) Mandataire: Mellul-Bendelac, Sylvie Lisette

(56) Documents cités:
- WO-A1-2013/182766
- WO-A1-2016/092177
- WO-A2-2007/116381
- US-A- 4 986 086
- US-A1- 2003 029 179

## Description

La présente invention concerne le domaine des procédés de transport et de distribution de produits thermosensibles, tels les produits pharmaceutiques et les produits alimentaires, en camions frigorifiques, et elle s'intéresse tout particulièrement à l'une des techniques utilisées dans ce type de camions, dite « injection indirecte » qui met en œuvre un (ou plusieurs) échangeur(s) de chaleur (par exemple des serpentins ou batteries à ailettes), dans lequel circule un fluide cryogénique tel l'azote liquide ou le CO₂ liquide, l'enceinte interne (chambre froide) au camion étant par ailleurs munie d'un système de circulation d'air (ventilateurs) mettant en contact cet air avec les parois froides de l'échangeur, ce qui permet ainsi de refroidir l'air interne à la chambre froide du camion, le fluide cryogénique qui alimente le ou les échangeur(s) provenant d'un réservoir de cryogène liquide traditionnellement situé sous le camion, réservoir régulièrement rempli à partir d'un stockage amont lors d'arrêts dans une station de remplissage.

Le document WO2007/116381 illustre l'état de la technique du transport frigorifique de produits thermosensibles.

Les ambiances maintenues à l'intérieur de la chambre froide peuvent être prévues aussi bien pour des produits frais (classiquement une température voisine de 4°C) que pour des produits surgelés (classiquement une température voisine de - 20°C).

A titre illustratif, ces échangeurs ou unités frigorifiques peuvent être constitués de batterie(s) échangeur(s) à extension de surface de type tubes/ailettes (ailettes continues ou indépendantes), en cuivre et/ou aluminium, la batterie étant alimentée en cryogène liquide, par exemple en azote liquide. Cette batterie est par exemple placée dans une caisse qui guide le flux d'air aspiré par le ventilateur évoqué ci-dessus. L'air aspiré est donc refroidi lors de son passage à travers la batterie au contact des ailettes froides et des tubes alimentés en azote liquide.

Le contrôle de procédé typiquement mis en œuvre dans de tels camions fonctionnant en injection indirecte est le plus souvent le suivant :
1- lors de la mise en route du système frigorifique du camion (par exemple au démarrage d'une tournée ou après un arrêt prolongé du système frigorifique pour une raison quelconque) ou encore après une ouverture de porte, on adopte un mode de « descente rapide » en température (cette industrie nomme cette phase « pull-down »).
2- Une fois la température de consigne atteinte dans la chambre de stockage des produits, on adopte un mode de contrôle/régulation qui permet de maintenir la température de la chambre de stockage des produits à une valeur de consigne (phase traditionnellement appelée phase de «maintien»).

Or, les besoins frigorifiques dans chacune de ces deux phases, en termes de puissance frigorifique requise, sont extrêmement différents.

En effet, en phase de « pull down », il est souvent demandé d'avoir une descente rapide en température de l'air de la chambre. Pour obtenir cet effet, il faut fournir une grande puissance frigorifique capable de vaincre l'inertie thermique de tout le système (air, groupe cryogénique, parois du camion) et les entrées de chaleurs à travers les parois du camion et via les ouvertures de ses portes. Ces besoins frigorifiques baissent drastiquement en phase de maintien étant donné que seules les entrées de chaleur à travers les parois persistent.

En d'autres termes, les besoins frigorifiques d'un camion durant une tournée donnée oscillent entre deux niveaux que l'on peut qualifier de « pleine charge » et « charge partielle ».

Le débit de cryogène vers les échangeurs de la chambre froide du camion va varier en fonction de la pression régnant dans le réservoir embarqué.

Un des problèmes réside alors dans le fait que la pression régnant dans le réservoir embarqué est liée à la température du cryogène, température du cryogène qui, elle, va dépendre d'un grand nombre d'autres facteurs.

On comprend dès lors que la puissance frigorifique disponible va être très sensible à la pression régnant dans le réservoir embarqué.

Un des objectifs de la présente invention est alors de proposer une solution permettant de stabiliser la pression régnant dans le réservoir embarqué et donc la puissance frigorifique disponible, cette régulation de pression pouvant s'exercer selon les besoins de la vie du camion, selon les phases de son fonctionnement.

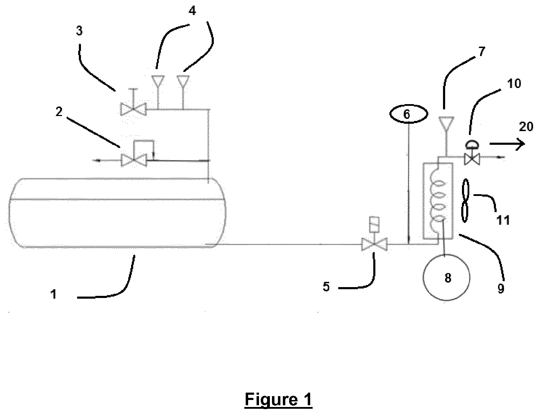

Pour cela, la solution proposée selon la présente invention repose sur les considérations suivantes :
- lors du remplissage du réservoir embarqué depuis un stockage « amont » : on souhaite pouvoir remplir en minimisant la pression dans ce réservoir, en recherchant une pression dans le réservoir qui soit proche de la pression atmosphérique ou ajustable à une valeur légèrement supérieure à cette pression atmosphérique. En effet, un delta P important augmente la production de vapeur, augmente le taux de diphasique, et limite le transfert dans le réservoir. Il s'agit en l'occurrence de pouvoir remplir avec un delta P amont-aval permettant de remplir les critères de débit élevé et de pertes limitées par détente lors de l'injection dans le réservoir embarqué. Ces pertes appelées « flash » sont liées aux conditions de pression et température du cryogène, par exemple de l'azote liquide, et il peut apparaitre judicieux de ne pas chercher à obtenir un remplissage avec la pression la plus basse dans le réservoir embarqué mais à une valeur légèrement supérieure.
- lors des phases de fonctionnement du camion, et notamment durant les phases de descente rapide (« pull down »), on souhaite pouvoir pressuriser le ciel gazeux du réservoir embarqué à une valeur maximale compatible avec les caractéristiques techniques de conception du réservoir, par exemple à 3 bar relatif, ce qui permet ensuite d'assurer le meilleur débit de cryogène vers le ou les échangeurs internes à la chambre du camion. En effet, la puissance du groupe cryogénique est directement liée à la pression d'alimentation du circuit échangeur. Le maximum de puissance est obtenu compte tenu du design classique du circuit pour une pression par exemple voisine de 3 bar. Le maintien de cette pression est donc important pour assurer le meilleur débit donc la puissance maximum, d'autant plus lorsque le nombre d'échangeurs est important, 2 ou 3.
- en fin de phase de « pull-down » ou bien lors d'une phase de maintien particulièrement longue (par exemple au-delà d'une heure), la pression du réservoir chute fort logiquement, on prévoit donc de réajuster la pression du ciel gazeux du réservoir pour la ramener au niveau d'une consigne ou bien dans une gamme de pressions souhaitée (par exemple entre 2.5 et 3 bar).
- si le système de refroidissement cryogénique est arrêté pour une durée prolongée, par exemple entre deux tournées, pendant une nuit ou plusieurs jours etc...., on peut souhaiter selon l'invention avoir une action sur la pression du ciel gazeux du réservoir, par un réajustement à la hausse, en vue d'une reprise de l'activité ultérieurement, ou bien au contraire à la baisse selon les besoins du procédé, par exemple pour limiter réchauffement en mode stand-by dans le réservoir. On peut en effet rappeler que lorsque le système est arrêté, il n'y a pas de consommation d'azote à proprement parler mais la pression dans le réservoir augmente par les entrées thermiques naturelles après réchauffage du liquide. Le gaz s'échappe alors si besoin par le dispositif de régulation de pression (déverseur, soupape), source de consommation non souhaitée. Si la pression d'équilibre gaz-liquide est basse, il faudra d'avantage de temps pour atteindre la pression d'ouverture du dispositif de régulation de pression, on diminue ainsi les pertes naturelles.
- le ou les échangeurs internes à la chambre sont alors considérés selon l'invention comme des évaporateurs et l'on déclenche les opérations détaillées ci-après dès que la pression dans le réservoir dévie d'une pression de consigne ou sort d'une gamme de pression donnée (par exemple s'éloigne de plus de 800 mbar d'une pression de consigne), et/ou dès que la pente de descente de température dans l'espace de stockage interne au camion durant la phase de « descente rapide » est trop faible, par exemple inférieure à 0,2°C/min.
- pour cela, si l'on se reporte à la figure 1 annexée, dont nous détaillerons le contenu plus loin dans la présente description :
   - à partir du réservoir embarqué 1 (ici un réservoir d'azote liquide), on procède à l'admission du cryogène dans l'échangeur 9 interne à la chambre interne du camion (ouverture de l'électrovanne 5), les moyens de ventilation 11 associés à l'échangeur étant à l'arrêt, la vanne 10 en sortie d'échangeur étant elle ouverte, ceci jusqu'à ce que la température de peau de l'échangeur (sonde 8) atteigne une consigne donnée (par exemple -5°C);
   - on procède ensuite à la fermeture de la vanne 10, à la fermeture de l'électrovanne 5, et l'on met en marche les moyens de ventilation 11 associés à l'échangeur, cette phase étant laissée opérationnelle jusqu'à ce que la température de peau de l'échangeur (sonde 8) soit supérieure à une consigne donnée, par exemple à 5°C, et/ou jusqu'à ce que la pression en sortie d'échangeur atteigne une consigne, par exemple 8 bar ;
   - on procède ensuite à la réouverture de l'électrovanne 5, et ainsi à la réadmission de fluide cryogénique dans ledit échangeur thermique, jusqu'à équilibre des pressions entre le réservoir et le réseau gaz en aval du réservoir, typiquement jusqu'à la vanne 10 en aval de l'échangeur (ce qui consiste à renvoyer la pression plus élevée (par exemple ici 8 bar) du réseau dans le réservoir, jusqu'à l'équilibrage au niveau de pression plus élevée), ou bien après une période de temporisation choisie, par exemple de 2 minutes.

On reconnait sur la figure 1 les éléments suivants :
- un réservoir 1 (ici un réservoir d'azote liquide) ;
- un déverseur 2 ;
- une vanne 3 de mise à l'air ;
- des soupapes 4 et 7 ;
- une électrovanne 5 pour azote liquide ;
- une sonde de pression 6 ;
- une sonde de température 8 ;
- un échangeur 9 situé au sein de la chambre interne au camion ;
- une vanne 10 de régulation du débit de gaz en sortie d'échangeur ;
- un ventilateur 11 ;
- la référence 20 désigne une évacuation vers l'extérieur.

La présente invention concerne alors un procédé de gestion du fonctionnement d'un camion de transport frigorifique de produits thermosensibles, du type à injection indirecte, où le camion est muni :
- d'au moins une chambre de stockage des produits,
- d'un réservoir d'un fluide cryogénique tel l'azote liquide ou le CO₂ liquide,
- d'un système d'échangeur thermique dans lequel circule le fluide cryogénique, système d'échangeur comprenant au moins un échangeur thermique interne à ladite au moins une chambre ;
- d'un système de ventilation, apte à mettre en contact l'air interne à la chambre avec les parois froides du ou des échangeurs du système d'échangeur thermique ;
- d'une sonde de température apte à mesurer la température interne à la chambre ainsi que de moyens permettant de comparer la valeur fournie par cette sonde à une consigne de température interne à la chambre;
- d'une sonde de température apte à mesurer la température de peau de l'échangeur, ainsi que de moyens permettant de comparer la valeur fournie par cette sonde à une consigne de température de peau ;
- d'une sonde apte à mesurer la pression dans la phase gazeuse du réservoir ainsi que de moyens permettant de comparer la valeur fournie par cette sonde à une consigne de pression pour cette phase gazeuse ou à une gamme de pression pour cette phase gazeuse ;
- d'une vanne de régulation du débit de gaz en sortie de gaz dudit au moins un échangeur ;
   se caractérisant en ce que dès que l'un ou chacun des évènements i) et j) suivants est observé :
   i) dès que la pression dans le réservoir dévie d'une pression de consigne ou sort d'une gamme de pression donnée, et/ou
   j) dès que la pente de descente de température dans l'espace de stockage interne au camion durant une phase de « descente rapide » est inférieure à une consigne donnée ;
   on procède à la mise en oeuvre des mesures suivantes .
   - à partir dudit réservoir, on procède à l'admission de fluide cryogénique dans ledit échangeur thermique interne à ladite chambre, les moyens de ventilation associés à l'échangeur étant à l'arrêt, ladite vanne de régulation en sortie d'échangeur étant, elle, ouverte, ceci jusqu'à ce que la température de peau de l'échangeur fournie par ladite sonde de température atteigne une consigne donnée ;
   - on procède ensuite à la fermeture de ladite vanne de régulation, à l'interruption de l'admission de fluide cryogénique dans ledit échangeur thermique, et l'on met en marche les moyens de ventilation associés à l'échangeur, cette phase étant laissée opérationnelle jusqu'à ce que la température de peau de l'échangeur fournie par ladite sonde de température soit supérieure à une consigne donnée, et/ou jusqu'à ce que la pression du gaz en sortie d'échangeur atteigne une consigne donnée ;
   - on procède ensuite à la réadmission de fluide cryogénique dans ledit échangeur thermique, jusqu'à équilibre des pressions entre le réservoir et le réseau gaz en aval du réservoir, typiquement jusqu'à ladite vanne de régulation, ou bien durant une période de temporisation choisie.

Les avantages de l'invention, constatés par la Demanderesse lors de ses expérimentations, peuvent être résumés ainsi :
- le système de gestion proposé est totalement automatisé ;
- il ne nécessite pas de composant spécifique ou additionnel par rapport aux installations classiquement mises en œuvre ;
- l'implantation est aisée sur des réservoirs et groupes de froid cryogéniques existants ;
- le système de gestion proposé offre une meilleure gestion de la puissance froide disponible selon les besoins et modes d'utilisation du groupe de froid cryogénique ;
- une meilleure optimisation de la consommation de fluide cryogénique et de meilleures estimations prévisionnelles ;
- une diminution des pertes en phase gazeuse, en limitant les entrées thermiques par conception.

## Revendications

1. Procédé de gestion du fonctionnement d'un camion de transport frigorifique de produits thermosensibles, du type à injection indirecte, où le camion est muni :
- d'au moins une chambre interne de stockage des produits,
- d'un réservoir (1) d'un fluide cryogénique tel l'azote liquide ou le CO₂ liquide,
- d'un système d'échangeur thermique dans lequel circule le fluide cryogénique, système d'échangeur comprenant au moins un échangeur thermique (9) interne à ladite au moins une chambre ;
- d'un système de ventilation (11), apte à mettre en contact l'air interne à la chambre avec les parois froides du ou des échangeurs du système d'échangeur thermique;
- d'une sonde de température interne apte à mesurer la température dans ladite chambre ainsi que de moyens permettant de comparer la valeur fournie par cette sonde à une consigne de température interne à la chambre;
- d'une sonde de température de peau (8) apte à mesurer la température de peau de l'échangeur, ainsi que de moyens permettant de comparer la valeur fournie par cette sonde à une consigne de température de peau ;
- d'une sonde apte à mesurer la pression dans la phase gazeuse du réservoir ainsi que de moyens permettant de comparer la valeur fournie par cette sonde à une consigne de pression pour cette phase gazeuse ou à une gamme de pression pour cette phase gazeuse ;
- d'une vanne de régulation (10) du débit de gaz en sortie de gaz dudit au moins un échangeur;
**se caractérisant en ce que** dès que l'un ou chacun des évènements i) et j) suivants est observé :
i) dès que la pression dans le réservoir dévie d'une pression de consigne ou sort d'une gamme de pression donnée, et/ou
j) dès que la pente de descente de la température dans ladite chambre de stockage interne au camion durant une phase de « descente rapide » est inférieure à une consigne donnée, phase de « descente rapide » qui intervient lors de la mise en route du système frigorifique du camion, par exemple au démarrage d'une tournée, ou après un arrêt prolongé du système frigorifique, ou encore après une ouverture de porte du camion ;
on procède à la mise en oeuvre des mesures suivantes .
- à partir dudit réservoir, on procède à l'admission de fluide cryogénique dans ledit échangeur thermique interne à ladite chambre du camion , les moyens de ventilation associés à l'échangeur étant à l'arrêt, ladite vanne de régulation en sortie d'échangeur étant, elle, ouverte, ceci jusqu'à ce que la température de peau de l'échangeur fournie par ladite sonde de température de peau atteigne une première consigne donnée ;
- on procède ensuite à la fermeture de ladite vanne de régulation, à l'interruption de l'admission de fluide cryogénique dans ledit échangeur thermique, et l'on met en marche les moyens de ventilation associés à l'échangeur, cette phase étant laissée opérationnelle jusqu'à ce que la température de peau de l'échangeur fournie par ladite sonde de température soit supérieure à une seconde consigne donnée, et/ou jusqu'à ce que la pression du gaz en sortie d'échangeur atteigne une consigne donnée ;
- on procède ensuite à la réadmission de fluide cryogénique dans ledit échangeur thermique, jusqu'à équilibre des pressions entre le réservoir et le réseau gaz en aval du réservoir, typiquement jusqu'à ladite vanne de régulation, ou bien durant une période de temporisation choisie.

## Patentansprüche

1. Verfahren zur Verwaltung des Betriebs eines Kühl-LKW für wärmeempfindliche Produkte, vom Typ der indirekten Einspritzung, wobei der LKW ausgestattet ist mit:
- mindestens einer internen Produktlagerkammer,
- einem Behälter (1) für ein kryogenes Fluid, wie flüssiger Stickstoff oder flüssiges CO₂,
- einem Wärmeaustauschersystem, in dem das kryogene Fluid zirkuliert, wobei das Tauschersystem mindestens einen internen Wärmeaustauscher (9) in der mindestens einen Kammer umfasst;
- einem Lüftungssystem (11), das in der Lage ist, die Luft innerhalb der Kammer in Kontakt mit den kalten Wänden des Austauschers oder der Austauscher des Wärmeaustauschersystems zu bringen;
- einer internen Temperatursonde, die in der Lage ist, die Temperatur in der Kammer zu messen, sowie Mitteln zum Vergleichen des von dieser Sonde gelieferten Wertes mit einem Temperatur-Sollwert im Inneren der Kammer;
- einer Außenhauttemperatursonde (8), die in der Lage ist, die Außenhauttemperatur des Austauschers zu messen, sowie Mitteln zum Vergleichen des von dieser Sonde gelieferten Wertes mit einem Außenhauttemperatur-Sollwert;
- einer Sonde, die in der Lage ist, den Druck in der gasförmigen Phase des Behälters zu messen, sowie Mitteln zum Vergleichen des von dieser Sonde gelieferten Wertes mit einem Druck-Sollwert für diese gasförmige Phase oder mit einem Druckbereich für diese gasförmige Phase;
- ein Ventil zum Regulieren (10) des Gasdurchsatzes am Gasauslass des mindestens einen Austauschers;
**dadurch gekennzeichnet, dass**, sobald eines oder jedes der folgenden Ereignisse (i) und (j) beobachtet wird:
i) sobald der Druck im Behälter von einem vorgegebenen Solldruck abweicht oder außerhalb eines vorgegebenen Druckbereichs liegt, und/oder
j) sobald die Neigung des Temperaturabfalls in der Lagerkammer im Inneren des LKW während einer Phase des "raschen Abfalls" kleiner als ein vorgegebener Sollwert ist, wobei diese Phase des "raschen Abfalls" dann eintritt, wenn das Kühlsystem des LKWs eingeschaltet wird, beispielsweise zu Beginn einer Fahrt oder nach einem längeren Stillstand des Kühlsystems oder nach dem Öffnen einer Tür des LKW;
folgende Maßnahmen umgesetzt werden:
- aus dem Behälter wird kryogenes Fluid in den Wärmeaustauscher im Inneren der Kammer des LKWs eingelassen, wobei die dem Wärmeaustauscher zugehörigen Lüftungsmittel stillstehen und das Regelventil am Auslass des Wärmeaustauschers offen ist, bis die von der Außenhauttemperatursonde gelieferte Temperatur des Wärmeaustauschers einen ersten vorgegebenen Sollwert erreicht;
- das Regelventil wird dann geschlossen, der Einlass von kryogenem Fluid in den Wärmeaustauscher wird unterbrochen und die dem Wärmeaustauscher zugehörigen Lüftungsmittel werden gestartet, wobei diese Phase so lange in Betrieb gelassen wird, bis die Außenhauttemperatur des Wärmeaustauschers, die von der Temperatursonde geliefert wird, größer als ein zweiter vorgegebener Sollwert ist und/oder bis der Druck des aus dem Wärmeaustauscher austretenden Gases einen vorgegebenen Sollwert erreicht;
- das kryogene Fluid wird dann wieder in den Wärmeaustauscher eingelassen, bis sich die Drücke zwischen dem Behälter und dem Gasnetz stromabwärts des Behälters, typischerweise bis zu dem Regelventil, im Gleichgewicht befinden, oder während einer gewählten Zeitverzögerungsperiode.

## Claims

1. Method for managing the operation of a refrigerated transport truck of the indirect injection type for heat-sensitive products, where the truck is provided with:
- at least one internal chamber for storing products,
- a tank (1) of a cryogenic fluid such as liquid nitrogen or liquid CO₂,
- a heat exchanger system wherein the cryogenic fluid circulates, exchanger system comprising at least one heat exchanger (9) internal to said at least one chamber;
- a ventilation system (11), able to put the air internal to the chamber in contact with the cold walls of the exchanger or exchangers of the heat exchanger system;
- an internal temperature probe able to measure the temperature in said chamber as well as means making it possible to compare the value provided by this probe with a temperature setpoint internal to the chamber;
- a skin temperature probe (8) able to measure the skin temperature of the exchanger, as well as means making it possible to compare the value provided by this probe with a skin temperature setpoint;
- a probe able to measure the pressure in the gaseous phase of the tank as well as means making it possible to compare the value provided by this probe with a pressure setpoint for this gaseous phase or with a pressure range for this gaseous phase;
- a valve for regulating (10) the gas flow rate at the gas outlet of said at least one exchanger;
being **characterised in that** as soon as one or each of the following events i) and j) is observed:
i) as soon as the pressure in the tank deviates from a setpoint pressure or moves outside of a given pressure range, and/or
j) as soon as the slope of descent of the temperature in said storage chamber internal to the truck during a "quick descent" phase is less than a given setpoint, "quick descent" phase that takes place during the turning on of the refrigerating system of the truck, for example at the start of a round, or after a prolonged stop of the refrigerating system, or after an opening of the door of the truck;
the following measures are implemented:
- from said tank, cryogenic fluid is taken into said heat exchanger internal to said chamber of the truck, the ventilation means associated with the exchanger being stopped, said regulating valve at the outlet of the exchanger being open, this until the skin temperature of the exchanger provided by said skin temperature probe reaches a first given setpoint;
- said regulating valve is then closed, the intake of cryogenic fluid into said heat exchanger is interrupted, and the ventilation means associated with the exchanger are turned on, with this phase left operational until the skin temperature of the exchanger provided by said temperature probe is higher than a second given setpoint, and/or until the pressure of the gas at the outlet of the exchanger reaches a given setpoint;
- cryogenic fluid is then again taken into said heat exchanger, until a balance is reached in the pressures between the tank and the gas network downstream of the tank, typically to said regulating valve, or during a selected timing period.
